# FASCICULE DE BREVET EUROPEEN

(11) **EP 1 537 757 B1**
(45) Date de publication et mention de la délivrance du brevet: **04.06.2014**
(21) Numéro de dépôt: 03758269.9
(22) Date de dépôt: 25.08.2003
(51) Int. Cl.: H04W 12/06

(54) **DISPOSITIF ELECTRONIQUE MOBILE A AUTHENTIFICATION DE SON ENVIRONNEMENT DE FONCTIONNEMENT**
MOBILE ELEKTRONISCHE VORRICHTUNG MIT AUTHENTIFIZIERUNG SEINER BETRIEBSUMGEBUNG
MOBILE ELECTRONIC DEVICE WITH AUTHENTICATION OF ITS OPERATING ENVIRONMENT

(30) Priorité: 12.09.2002 FR 0211328
(43) Date de publication de la demande: 08.06.2005
(73) Titulaire: Heleu, Robert, 31700 Blagnac (FR)
(72) Inventeur: Heleu, Robert, 31700 Blagnac (FR)
(74) Mandataire: Cabinet Plasseraud
(86) Numéro de dépôt international: PCT/FR2003/002571
(87) Numéro de publication internationale: WO 2004/025984

(56) Documents cités:
- WO-A-99/00863
- FR-A- 2 817 102
- FR-A- 2 820 931

## Description

La présente invention concerne un dispositif électronique mobile du type comportant des moyens d'authentification de son environnement de fonctionnement et des moyens de verrouillage au moins partiel de son fonctionnement dans le cas d'une authentification négative.

Les dispositifs mobiles sont aujourd'hui courants et comportent des moyens d'authentification de l'environnement de fonctionnement lors de la mise en service, tels que des moyens de relevé d'empreintes digitales.

Un exemple de tel dispositif est décrit en particulier dans la demande FR-A-2 817 102.

De tels dispositifs sont adaptés pour être mis en service après l'authentification d'une empreinte digitale. De plus, le relevé d'empreinte digital est réalisé en vérifiant simultanément que le taux d'humidité et la température dans la zone de relevé sont dans des normes humaines afin d'éviter la falsification d'une empreinte à l'aide par exemple d'un moule en silicone.

Cependant, une fois l'authentification effectuée, ces dispositifs sont susceptibles d'être utilisés frauduleusement tant qu'une nouvelle procédure de mise en service n'est pas réalisée.

Le but de la présente invention est de remédier à ce problème en permettant d'accroître la sécurité liée à l'authentification de l'environnement de fonctionnement de tels dispositifs mobiles.

A cet effet, l'invention a pour objet un dispositif électronique selon la revendication 1.

Selon d'autres caractéristiques :
- lesdits moyens d'entrée comportent une prise d'alimentation d'une batterie rechargeable permettant l'entrée, pour sa recharge, d'un courant de charge formant ledit stimulus ;
- lesdits moyens de mesure comportent une résistance agencée pour être traversée par un courant dépendant dudit courant de charge et un capteur de la température de ladite résistance, ladite température formant ladite grandeur ;
- lesdits moyens d'entrée comportent une interface homme/machine permettant l'entrée d'informations par l'utilisateur pour l'exécution d'une fonction propre au dispositif, l'action humaine d'entrée desdites informations formant ledit stimulus et lesdits moyens de mesure étant adaptés pour mesurer la valeur de grandeurs bio-métriques caractéristiques de l'environnement de fonctionnement et dépendantes de ladite action humaine d'entrée d'informations ;
- ladite interface homme/machine comporte un écran tactile permettant la détection de l'appui sur certaines zones, l'appui sur certaines zones formant ledit stimulus et lesdits moyens de mesure comportent un capteur d'empreintes digitales pour effectuer au moins un relevé d'empreinte digitale lors de l'utilisation dudit écran tactile par l'utilisateur, ladite empreinte digitale formant ladite grandeur bio-métrique ;
- ladite interface homme/machine comporte des moyens de recueil d'une onde acoustique émise par l'utilisateur, l'onde acoustique formant ledit stimulus et lesdits moyens de mesure comportant des moyens d'analyse d'une empreinte vocale de ladite onde acoustique lors de l'utilisation desdits moyens de recueil d'une onde acoustique, par l'utilisateur, ladite empreinte vocale formant ladite grandeur bio-métrique ;
- ladite interface homme/machine comporte un clavier permettant la frappe d'informations par l'utilisateur, la frappe formant ledit stimulus et lesdits moyens de mesure comportent un capteur de la vitesse de frappe sur ledit clavier par l'utilisateur, ladite vitesse de frappe formant ladite grandeur bio-métrique ;
- il comporte en outre des moyens d'identification d'un utilisateur adaptés pour délivrer, en cas d'identification négative, une commande de verrouillage aux moyens commandables de verrouillage ;
- ledit dispositif comporte un processeur permettant l'exécution d'une pluralité de fonctions et lesdits moyens commandables de verrouillage sont adaptés pour verrouiller ce processeur afin d'empêcher le fonctionnement du dispositif mobile ;
- c'est un dispositif mobile de télécommunication comportant une carte d'identification d'abonné comprenant des informations d'identification permettant l'accès à au moins un réseau de télécommunication sans fil, lesdits moyens commandables de verrouillage étant adaptés pour pouvoir verrouiller cette carte d'identification d'abonné afin d'empêcher l'accès aux réseaux de télécommunication ;
- c'est un dispositif de télécommunication et lesdits moyens de comparaison sont adaptés pour délivrer en cas de non-concordance, une commande d'émission d'un message d'alerte à l'intention d'un serveur distant au travers d'un réseau de télécommunication ;
- c'est un dispositif de télécommunication et il comporte des moyens automatiques d'émission/réception d'informations de localisation, non verrouillables par lesdits moyens commandables de verrouillage ;
- c'est un téléphone mobile.

L'invention sera mieux comprise à la lecture de la description qui va suivre, donnée uniquement à titre d'exemple et faite en se référant aux dessins annexés, sur lesquels :
- la Fig.1 est un schéma synoptique d'un téléphone équipé selon l'invention ; et
- la Fig.2 est un schéma de principe du détail d'un mode de réalisation de l'invention.

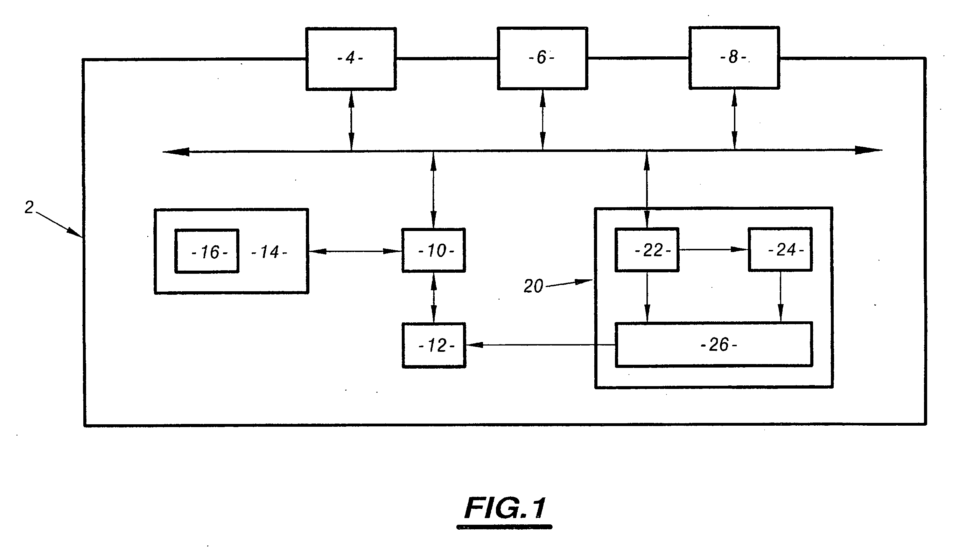

Le téléphone mobile 2 de la figure 1 comporte des éléments exposés à l'environnement de fonctionnement qui permettent l'entrée de stimulus pour l'exécution de fonctions propres au téléphone 2, tels que par exemple, un émetteur/récepteur 4 adapté pour l'émission et la réception d'informations sur et depuis un réseau de télécommunication sans fil, une interface homme/machine 6 et une prise d'alimentation d'une batterie rechargeable 8.

Ces éléments sont tous reliés entre eux et sont pilotés par un processeur 10 adapté pour la mise en oeuvre d'une pluralité de fonctions.

Le téléphone mobile 2 comprend également des moyens 12 de verrouillage au moins partiel de son fonctionnement et une carte d'identification d'abonné 14 dite carte « SIM », comprenant en mémoire un code personnel d'utilisateur 16 dit code « PIN ». De manière classique, la carte SIM 14 et le code PIN 16 forment des moyens d'identification de l'utilisateur du téléphone 2.

Selon l'invention, le téléphone mobile 2 comporte en outre des moyens 20 d'authentification de son environnement de fonctionnement, comportant des moyens 22 de mesure de grandeurs caractéristiques de l'environnement de fonctionnement dépendantes des stimulus entrés pour l'exécution d'une fonction propre au téléphone mobile 2, distincte de la seule authentification mise en oeuvre les moyens d'authentification 20. Ces moyens 22 permettent de mesurer une ou plusieurs grandeurs au travers des différents éléments du téléphone mobile 2 permettant l'entrée de stimulus tels que l'émetteur/récepteur 4, l'interface homme/machine 6 ou la prise d'alimentation de la batterie 8.

Les moyens 20 d'authentification comportent également des moyens 24 de mémorisation d'une ou plusieurs grandeurs de référence de la ou des grandeurs mesurées par les moyens 22 et des moyens 26 de comparaison de la ou des grandeurs courantes délivrées par les moyens de mesure 22 avec la ou les grandeurs de référence mémorisées par les moyens 24, afin de délivrer, aux moyens 12 commandables de verrouillage, une commande de verrouillage en cas de non-concordance.

A la mise en service du téléphone mobile 2, l'utilisateur est invité par les moyens classiques d'identification, à saisir, via l'interface 6, un code qui est comparé par le processeur 10 au code PIN 16 de la carte SIM 14.

Dans le cas où plusieurs codes erronés sont saisis successivement, les moyens 12 verrouillent la carte SIM 14 de sorte que le téléphone mobile 2 ne peut plus se connecter aux réseaux de télécommunication empêchant ainsi l'émission et la réception d'informations.

De manière classique, un tel verrouillage du téléphone 2 est partiel afin de laisser la possibilité de procéder à des appels vers des numéros d'urgence.

Par ailleurs, périodiquement ou à chaque entrée d'un stimulus pour l'exécution d'une fonction propre au dispositif 2, distincte de la seule authentification mise en oeuvre par les moyens 20 d'authentification, au moins une grandeur courante caractéristique de l'environnement de fonctionnement et dépendante du stimulus, est mesurée par les moyens 22.

Cette ou ces grandeurs courantes sont comparées par les moyens 26 de comparaison à au moins une grandeur de référence mémorisée par les moyens 24.

Si la ou les grandeurs courantes ne concordent pas avec la ou les grandeurs de référence, les moyens de comparaison 26 émettent une commande de verrouillage aux moyens 12 commandables de verrouillage afin d'entraîner le verrouillage au moins partiel du téléphone mobile 2.

Eventuellement, les moyens 26 de comparaison sont adaptés pour effectuer une comparaison entre la ou les grandeurs courantes délivrées par les moyens de mesure 22 et la ou les grandeurs de référence enregistrées par les moyens de mémorisation 24 avec une marge de tolérance, de sorte que de faibles variations des grandeurs caractéristiques liées à l'environnement de fonctionnement n'entraînent pas le verrouillage du téléphone mobile 2.

Avantageusement, périodiquement ou à chaque comparaison concordante, les moyens 24 de mémorisation enregistrent à nouveau la ou les grandeurs délivrées par les moyens de mesure 22 de manière à mettre à jour la ou les grandeurs de référence mémorisées.

Ainsi, des modifications progressives dues notamment à la modification dans le temps de l'environnement de fonctionnement, telle que par exemple la modification du comportement de la batterie rechargeable 8, n'entraînent pas le verrouillage du téléphone mobile 2.

La commande de verrouillage délivrée par les moyens de comparaison 26, entraîne le verrouillage de la carte SIM 14 et/ ou le verrouillage du microprocesseur 10 de sorte que le téléphone mobile 2 n'est plus utilisable même avec une autre carte SIM similaire à la carte 14.

Avantageusement, le verrouillage du téléphone mobile 2 est réalisé par étapes, de sorte qu'en cas de non-concordance détectée par les moyens 26 de comparaison, le téléphone mobile 2 bascule dans un mode de fonctionnement dans lequel il requiert une authentification de l'utilisateur et dans lequel aucune autre fonction ne peut être activée. Par exemple, cette authentification est réalisée à l'aide d'une mesure précise de la ou des grandeurs utilisées ou encore à l'aide d'un code d'authentification.

Par la suite, si cette authentification n'est pas réalisée au bout d'un temps prédéterminé, le téléphone mobile 2 est verrouillé entièrement ou partiellement ainsi que cela a été décrit précédemment.

Avantageusement, lorsque les moyens 26 de comparaison délivrent une commande de verrouillage, le microprocesseur 10 transmet simultanément par l'intermédiaire de l'émetteur/récepteur 4 un message d'alerte à un serveur de gestion du réseau de télécommunication utilisé entraînant, par exemple, le verrouillage du compte client associé au téléphone mobile 2 et l'initiation d'une procédure de localisation par interrogation des balises de retransmission du réseau de télécommunication sans fil afin de permettre une localisation du téléphone mobile 2.

Lors d'une telle procédure de localisation, le téléphone mobile 2 continue à échanger automatiquement des informations de localisation avec le réseau de télécommunication malgré le verrouillage.

Avantageusement, ces échanges d'informations sont réalisés sans notifier l'utilisateur.

Le verrouillage réalisé peut être définitif ou peut être annulable par exemple en se rendant à un point de vente de manière à attester la propriété du téléphone mobile 2 et à le faire déverrouiller.

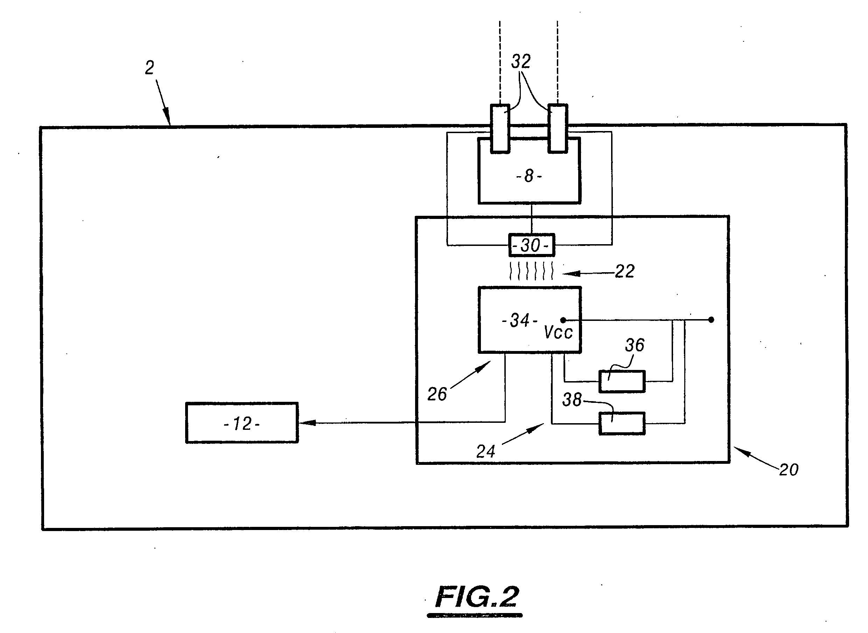

La figure 2 représente le détail d'un mode de réalisation d'un dispositif selon l'invention dans lequel le stimulus lié à l'environnement de fonctionnement est un courant de charge délivré par un chargeur et permettant de recharger la batterie d'alimentation 8.

Dans ce mode de réalisation, les moyens d'authentification 20 comportent une résistance 30 connectée à des bornes 32 formant une prise d'alimentation de la batterie 8, et un composant électronique 34 formant capteur de température disposé à proximité de la résistance 30. Par exemple, ce composant 34 est un MAX 6662 de la société MAXIM Inc.

Un tel composant 34 permet de comparer une température mesurée à une plage de températures de fonctionnement définie à l'aide de deux résistances 36 et 38 reliées à son alimentation.

Les valeurs des résistances 36 et 38 permettent d'ajuster la tension sur des broches d'entrée du composant 34 et de définir ainsi un seuil minimal et un seuil maximal de température. Ainsi, les résistances 30, 36 et 38 associées au composant 34 forment les moyens 22 de mesure, de 24 mémorisation et 26 de comparaison.

Lorsque la batterie 8 est connectée à un chargeur, un courant dit « courant de charge », propre à ce chargeur et formant un stimulus pour l'exécution de la recharge de la batterie 8, s'écoule dans la batterie et traverse également la résistance 30 entraînant une déperdition d'énergie par effet Joule et une élévation de sa température.

Cette température, formant la grandeur caractéristique de l'environnement dépendante du stimulus, est mesurée par le composant 34 qui vérifie ensuite si elle est comprise dans la plage définie par les résistances 36 et 38, afin de délivrer une commande de verrouillage si ce n'est pas le cas.

L'intensité du courant de charge variant en fonction du niveau de charge de la batterie 8, la plage de fonctionnement doit englober les températures résultant d'un courant de charge maximum lorsque la batterie est totalement déchargée et d'un courant de charge minimum lorsque la batterie est entièrement chargée.

En variante, les résistances 36 et 38 sont des résistances variables associées à un circuit de commande permettant d'ajuster leurs valeurs et à des moyens d'étalonnage.

Ainsi, lors de la première charge de la batterie 8, le dispositif est étalonné en fonction du chargeur utilisé. Pour cela, les moyens de mesure 22 effectuent un relevé des températures de fonctionnement de la résistance 30 lors de la première utilisation.

Ces températures sont enregistrées par les moyens d'étalonnage qui les transmettent au circuit de commande pour que les résistances variables soient ajustées afin de définir les bornes supérieure et inférieure de la plage de température relevée.

Dans une autre variante, les moyens d'enregistrement 24 sont adaptés pour mémoriser des grandeurs de référence en fonction du niveau de charge de la batterie 8, par exemple, en mémorisant un certain nombre d'échantillons de température au cours d'un cycle de charge complet.

Dans ce cas, une mesure du niveau de charge de la batterie 8 est délivrée simultanément à la mesure de température et permet une action sur le réglage des résistances 36 et 38 en fonction du niveau de charge mesuré, de sorte que la plage de température autorisée est ajustée en fonction du niveau de charge de la batterie 8.

Ainsi, à chaque fois que le téléphone mobile 2 est rechargé, les moyens 20 d'authentification vérifient si le chargeur utilisé est bien le chargeur d'origine qui a été utilisé pour la première charge de la batterie 8.

En cas de non-concordance, les moyens 26 de comparaison délivrent une commande de verrouillage aux moyens de verrouillage 12, ainsi que cela a été décrit précédemment, entraînant, par exemple, le verrouillage de la carte SIM 14 réalisé de manière classique.

Dans un autre mode de réalisation, les moyens 22 de mesure sont adaptés pour mesurer la valeur de grandeurs bio-métriques dépendantes d'actions humaines d'entrée d'informations par l'utilisateur pour l'exécution d'une fonction propre au téléphone 2, distincte de la seule authentification mise en oeuvre par les moyens d'authentification 20.

Par exemple, l'interface homme/machine 6 comporte un écran tactile manipulable par l'utilisateur directement avec ses doigts, l'appui sur certaines zones de l'écran étant détectable et formant un stimulus pour l'exécution d'une fonction propre au téléphone 2.

Dans ce cas, les moyens 22 sont adaptés pour effectuer au moins un relevé d'empreinte digitale lors de l'utilisation de l'écran tactile, cette empreinte formant une grandeur bio-métrique caractéristique de l'environnement et dépendante du stimulus.

Par exemple, lors de la première utilisation du téléphone mobile 2, un relevé précis d'une empreinte digitale est effectué afin d'être enregistré par les moyens 24 de mémorisation comme grandeur de référence.

Périodiquement ou à chaque utilisation de l'écran tactile par l'utilisateur, une empreinte digitale est relevée et comparée avec l'empreinte de référence mémorisée par les moyens 24.

Dans le cas où l'empreinte digitale courante correspond au moins partiellement à l'empreinte digitale de référence, le dispositif fonctionne normalement.

Dans le cas contraire, le dispositif 2 interrompt son fonctionnement et bascule dans un mode de fonctionnement dans lequel il requiert une identification de l'utilisateur en l'invitant à appliquer son doigt sur l'écran tactile de manière à effectuer un relevé précis de l'empreinte digitale afin de la comparer à l'empreinte digitale de référence.

En cas de non-concordance, les moyens 26 de comparaison délivrent alors un signal de verrouillage aux moyens 12 de verrouillage du téléphone mobile 2 ainsi que cela a été décrit précédemment.

Dans encore un autre mode de réalisation, l'interface 6 comporte des moyens de recueil d'une onde acoustique formant un stimulus pour l'exécution d'une fonction propre au dispositif, distincte de la seule authentification mise en oeuvre par les moyens d'authentification 20.

Dans ce cas, les moyens de mesure 22 comportent des moyens d'analyse d'une empreinte vocale lors de l'utilisation des moyens de recueil d'une onde acoustique par l'utilisateur, cette empreinte vocale formant une grandeur bio-métrique caractéristique de l'environnement et dépendante du stimulus.

Ainsi, périodiquement ou à chaque utilisation des moyens de recueil d'une onde acoustique du téléphone mobile 2, l'empreinte vocale courante est analysée par les moyens 22 puis comparée à une empreinte vocale de référence mémorisée lors de la ou des premières utilisations du téléphone mobile 2.

Enfin, dans encore un autre mode de réalisation, les moyens de mesure 22 sont des moyens logiciels adaptés pour mesurer automatiquement des grandeurs bio-métriques caractéristiques de l'environnement liées aux usages de l'utilisateur du téléphone mobile 2.

Par exemple, les moyens de mesure 22 sont adaptés pour mesurer la vitesse de frappe de l'utilisateur sur le clavier du téléphone 2 lors de la composition d'un numéro de téléphone. Ainsi, au bout d'un certain nombre de manipulations, une valeur moyenne de vitesse de frappe est mémorisée par les moyens 24 de mémorisation d'une grandeur de référence et permet d'effectuer des comparaisons avec des mesures courantes de la vitesse de frappe.

Dans les modes de réalisation décrits, les moyens 22 de mesure sont adaptés pour effectuer des mesures de grandeurs caractéristiques de l'environnement de fonctionnement sans notifier l'utilisateur de la réalisation de telles mesures, de manière à accroître la sécurité de l'utilisation du dispositif.

Bien entendu, d'autres grandeurs caractéristiques de l'environnement de fonctionnement et dépendantes de l'entrée de stimulus que celles décrites, peuvent être utilisées, de même que des combinaisons mettant en oeuvre plusieurs grandeurs.

Il apparaît donc que le dispositif de l'invention permet d'accroître sensiblement la sécurité liée à l'utilisation d'un dispositif par l'authentification de l'environnement de fonctionnement d'un dispositif mobile lors de l'entrée d'un stimulus pour l'exécution d'une fonction propre au dispositif, distincte de la seule authentification mise en oeuvre par les moyens d'authentification.

Afin d'accroître encore la sécurité de tels dispositifs, ils peuvent également inclure d'autres moyens d'identification des utilisateurs tels que des systèmes classiques de reconnaissance de la carte SIM utilisée.

Enfin, le dispositif de l'invention peut être tout type de dispositif électronique mobile, tel que par exemple, un ordinateur portable, un assistant électronique ou « PDA », une calculatrice, une caméra, un appareil photo, etc....

## Revendications

1. Dispositif électronique (2) du type comportant des moyens (20) d'authentification de son environnement de fonctionnement, des moyens (12) commandables de verrouillage au moins partiel de son fonctionnement, et des moyens (4, 6, 8) d'entrée d'un stimulus pour l'exécution d'une fonction propre au dispositif (2), **caractérisé en ce que** lesdits moyens d'authentification (20) comportent :
des moyens (22) de mesure configurés pour mesurer, périodiquement ou lors de l'entrée d'un stimulus pour l'exécution d'une fonction propre au dispositif (2) distincte de la seule authentification mise en oeuvre par les moyens (20) d'authentification, la valeur d'au moins une grandeur caractéristique de l'environnement de fonctionnement et dépendante du stimulus, sans que la mise en oeuvre de ladite mesure soit notifiée ;
des moyens (24) de mémorisation d'au moins une grandeur de référence ;
et des moyens (26) de comparaison entre au moins une grandeur délivrée par lesdits moyens (22) de mesure et ladite au moins une grandeur de référence, pour délivrer, en cas de non-concordance, une commande de verrouillage aux moyens (12) commandables de verrouillage.

2. Dispositif selon la revendication 1, **caractérisé en ce que** lesdits moyens d'entrée comportent une prise d'alimentation d'une batterie rechargeable (8) permettant l'entrée, pour sa recharge, d'un courant de charge formant ledit stimulus.

3. Dispositif selon la revendication 2, **caractérisé en ce que** lesdits moyens de mesure (22) comportent une résistance (30) agencée pour être traversée par un courant dépendant dudit courant de charge et un capteur (34) de la température de ladite résistance (30), ladite température formant ladite grandeur.

4. Dispositif selon l'une quelconque des revendications 1 à 3, **caractérisé en ce que** lesdits moyens d'entrée comportent une interface homme/machine (6) permettant l'entrée d'informations par l'utilisateur pour l'exécution d'une fonction propre au dispositif (2), l'action humaine d'entrée desdites informations formant ledit stimulus et lesdits moyens (22) de mesure étant adaptés pour mesurer la valeur de grandeurs bio-métriques caractéristiques de l'environnement de fonctionnement et dépendantes de ladite action humaine d'entrée d'informations.

5. Dispositif selon la revendication 4, **caractérisé en ce que** ladite interface homme/machine (6) comporte un écran tactile permettant la détection de l'appui sur certaines zones, l'appui sur certaines zones formant ledit stimulus et **en ce que** lesdits moyens (22) de mesure comportent un capteur d'empreintes digitales pour effectuer au moins un relevé d'empreinte digitale lors de l'utilisation dudit écran tactile par l'utilisateur, ladite empreinte digitale formant ladite grandeur bio-métrique.

6. Dispositif selon la revendication 4, **caractérisé en ce que** ladite interface homme/machine (6) comporte des moyens de recueil d'une onde acoustique émise par l'utilisateur, l'onde acoustique formant ledit stimulus et **en ce que** lesdits moyens de mesure (22) comportant des moyens d'analyse d'une empreinte vocale de ladite onde acoustique lors de l'utilisation desdits moyens de recueil d'une onde acoustique par l'utilisateur, ladite empreinte vocale formant ladite grandeur bio-métrique.

7. Dispositif selon la revendication 4, **caractérisé en ce que** ladite interface homme/machine (6) comporte un clavier permettant la frappe d'informations par l'utilisateur, la frappe formant ledit stimulus et **en ce que** lesdits moyens de mesure (22) comportent un capteur de la vitesse de frappe sur ledit clavier par l'utilisateur, ladite vitesse de frappe formant ladite grandeur bio-métrique.

8. Dispositif selon l'une quelconque des revendications 1 à 7, **caractérisé en ce qu'**il comporte en outre des moyens d'identification d'un utilisateur adaptés pour délivrer, en cas d'identification négative, une commande de verrouillage aux moyens (12) commandables de verrouillage.

9. Dispositif selon l'une quelconque des revendications 1 à 8, **caractérisé en ce que** ledit dispositif (2) comporte un processeur (10) permettant l'exécution d'une pluralité de fonctions et **en ce que** lesdits moyens (12) commandables de verrouillage sont adaptés pour verrouiller ce processeur (10) afin d'empêcher le fonctionnement du dispositif mobile (2).

10. Dispositif selon l'une quelconque des revendications 1 à 9, **caractérisé en ce que** c'est un dispositif mobile de télécommunication (2) comportant une carte d'identification d'abonné (14) comprenant des informations d'identification permettant l'accès à au moins un réseau de télécommunication sans fil, lesdits moyens (12) commandables de verrouillage étant adaptés pour pouvoir verrouiller cette carte d'identification d'abonné (14) afin d'empêcher l'accès aux réseaux de télécommunication.

11. Dispositif selon l'une quelconque des revendications 1 à 10, **caractérisé en ce que** c'est un dispositif de télécommunication (2) et **en ce que** lesdits moyens (26) de comparaison sont adaptés pour délivrer en cas de non-concordance, une commande d'émission d'un message d'alerte à l'intention d'un serveur distant au travers d'un réseau de télécommunication.

12. Dispositif selon l'une quelconque des revendications 1 à 11, **caractérisé en ce que** c'est un dispositif de télécommunication (2) et **en ce qu'**il comporte des moyens automatiques d'émission/réception d'informations de localisation, non verrouillables par lesdits moyens (12) commandables de verrouillage.

13. Dispositif selon l'une quelconque des revendications 10 à 12, **caractérisé en ce que** c'est un téléphone mobile.

## Patentansprüche

1. Elektronische Vorrichtung (2) mit Mitteln (20) zur Authentifizierung seiner Betriebsumgebung, steuerbaren Mitteln (12) zum zumindest teilweisen Blockieren seines Betriebes und Mittel (4, 6, 8) zur Eingabe eines Auslöseimpulses zur Ausführung einer der Vorrichtung (2) eigenen Funktion, **dadurch gekennzeichnet, dass** die Mittel (20) zur Authentifizierung umfassen:
Messmittel (22), die ausgebildet sind, um periodisch oder bei Eingabe eines Auslöseimpulses zur Ausführung einer der Vorrichtung (2) eigenen Funktion, die sich von der einzigen Authentifizierung unterscheidet, die durch die Mittel (20) zur Authentifizierung ausgeführt wird, den Wert mindestens einer charakteristischen Größe der Betriebsumgebung zu messen, Größe, die von dem Auslöseimpuls abhängt, ohne dass das Ausführen der Messung bemerkt wird;
Mittel (24) zum Speichern mindestens einer Referenzgröße; und
Mittel (26) zum Vergleich von mindestens einer Größe, die von den Messmitteln (22) geliefert wird, mit der mindestens einer Referenzgröße, um im Fall der Nichtkonkordanz einen Blockierbefehl an die steuerbaren Mittel (12) zum Blockieren zu senden.

2. Vorrichtung nach Anspruch 1, **dadurch gekennzeichnet, dass** die Mittel zur Eingabe einen Stromversorgungsanschluss einer wieder aufladbaren Batterie (8) aufweisen, der zwecks ihrer Wiederaufladung den Zufluss eines Ladestromes, der den Auslöseimpuls bildet, erlaubt.

3. Vorrichtung nach Anspruch 2, **dadurch gekennzeichnet, dass** die Messmittel (22) einen Widerstand (30), der vorgesehen ist, um von einem Strom durchflossen zu werden, der von dem Ladestrom abhängt, und einen Sensor (34) zum Messen der Temperatur des Widerstandes (30) aufweisen, wobei die Temperatur die besagte Größe bildet.

4. Vorrichtung nach einem beliebigen der Ansprüche 1 bis 3, **dadurch gekennzeichnet, dass** die Mittel zur Eingabe eine Schnittstelle Mensch / Maschine (6) aufweisen, die die Eingabe von Informationen durch einen Benutzer für das Ausführen einer der Vorrichtung (2), eigenen Funktion ermöglichen, wobei die menschliche Handlung der Eingabe der Informationen den Auslöseimpuls bildet und die Messmittel (22) ausgebildet sind, um den Wert von charakteristischen biometrischen Größen der Betriebsumgebung zu messen, die von der menschlichen Handlung der Eingabe von Informationen abhängen.

5. Vorrichtung nach Anspruch 4, **dadurch gekennzeichnet, dass** die Schnittstelle Mensch / Maschine (6) einen berührungsempfindlichen Bildschirm umfasst, der die Detektion eines Druckes auf bestimmte Bereiche ermöglicht, wobei der Druck auf bestimmte Bereiche den Auslöseimpuls bildet, und dass die Messmittel (22) einen Sensor zum Erfassen von Fingerabdrücken aufweisen, um mindestens einmal während der Benutzung des berührungsempfindlichen Bildschirms durch den Benutzer einen Fingerabdruck zu erfassen, wobei der Fingerabdruck die biometrische Größe bildet.

6. Vorrichtung nach Anspruch 4, **dadurch gekennzeichnet, dass** die Schnittstelle Mensch / Maschine (6) Mittel zum Aufnehmen einer akustischen Welle umfasst, die von einem Benutzer ausgesandt wurde, wobei die akustische Welle den Auslöseimpuls bildet, und dass die Messmittel (22) Mittel zur Analyse eines Stimmbildes der akustischen Welle während der Benutzung der Mittel zum Aufnehmen einer akustischen Welle durch den Benutzer aufweisen, wobei das Stimmbild die biometrische Größe bildet.

7. Vorrichtung nach Anspruch 4, **dadurch gekennzeichnet, dass** die Schnittstelle Mensch / Maschine (6) eine Tastatur aufweist, die die Eingabe von Informationen durch den Benutzer ermöglicht, wobei die Eingabe den Auslöseimpuls bildet, und dass die Messmittel (22) einen Sensor zur Messung der Geschwindigkeit der Eingabe auf der Tastatur durch den Benutzer aufweisen, wobei die Geschwindigkeit der Eingabe die biometrische Größe bildet.

8. Vorrichtung nach einem beliebigen der Ansprüche 1 bis 7, **dadurch gekennzeichnet, dass** sie ferner Mittel zur Identifizierung eines Benutzers umfasst, die ausgebildet sind, um im Fall einer negativen Identifizierung einen Blockierbefehl an die steuerbaren Mittel (12) zum Blockieren zu senden.

9. Vorrichtung nach einem beliebigen der Ansprüche 1 bis 8, **dadurch gekennzeichnet, dass** die Vorrichtung (2) einen Prozessor (10) umfasst, der das Ausführen einer Vielzahl von Funktionen ermöglicht, und dass die steuerbaren Mittel (12) zum Blockieren ausgebildet sind, um diesen Prozessor (10) zu blockieren, um den Betrieb der mobilen Vorrichtung (2) zu verhindern.

10. Vorrichtung nach einem beliebigen der Ansprüche 1 bis 9, **dadurch gekennzeichnet, dass** es sich um eine mobile Vorrichtung zur Telekommunikation (2) handelt, die eine Karte zur Identifizierung eines Abnehmers (14) umfasst, die Informationen zur Identifizierung trägt, die den Zugang zu mindestens einem drahtlosen Telekommunikationsnetz ermöglicht, wobei die steuerbaren Mittel (12) zum Blockieren ausgebildet sind, um diese Karte zur Identifizierung eines Abnehmers (14) zu blockieren, um den Zugang zu den Telekommunikationsnetzen zu verhindern.

11. Vorrichtung nach einem beliebigen der Ansprüche 1 bis 10, **dadurch gekennzeichnet, dass** es sich um eine Vorrichtung zur Telekommunikation (2) handelt, und dass die Mittel (26) zum Vergleich ausgebildet sind, um im Fall der Nichtkonkordanz einen Befehl zur Ausgabe einer Warnmeldung an einen entfernten Server über ein Telekommunikationsnetz zu senden.

12. Vorrichtung nach einem beliebigen der Ansprüche 1 bis 11, **dadurch gekennzeichnet, dass** es sich um eine Vorrichtung zur Telekommunikation (2) handelt, und dass sie automatische Mittel zur Abgabe/ zum Empfang von Informationen zum Standort umfasst, wobei die Mittel durch die steuerbaren Mittel (12) zum Blockieren nicht blockierbar sind.

13. Vorrichtung nach einem beliebigen der Ansprüche 10 bis 12, **dadurch gekennzeichnet, dass** es sich um ein Mobiltelefon handelt.

## Claims

1. Electronic device (2) of the type comprising means (20) for authenticating its operating environment, controllable means (12) for at least partially locking its operation, and means (4, 6, 8) for inputting a stimulus for running a function specific to the device (2), **characterised in that** said authentication means (20) comprise:
measuring means (22) configured to measure, periodically or when a stimulus is input, separately from just the authentication run by the authentication means (20), in order to run a function specific to the device (2), the value of at least one variable characteristic of the operating environment and dependent on the stimulus without the running of said measurement being notified;
means (24) for storing in memory at least one reference variable;
and means (26) for running a comparison between at least one variable supplied by said measuring means (22) and said at least one reference variable in order to issue a command to lock the controllable locking means (12) in the event of a non-match.

2. Device as claimed in claim 1, **characterised in that** said input means comprise a power socket for a rechargeable battery (8) enabling the input of a charging current constituting said stimulus in order to recharge it.

3. Device as claimed in claim 2, **characterised in that** said measuring means (22) comprise a resistor (30) configured to allow a current to pass through it depending on said charging current and a sensor (34) for detecting the temperature of said resistor (30), said temperature constituting said variable.

4. Device as claimed in any one of claims 1 to 3, **characterised in that** said input means comprise a man/machine interface (6) enabling information to be input by the user in order to run a function specific to the device (2), the human action of inputting said information constituting said stimulus, and said measuring means (22) being configured to measure the value of biometric variables characteristic of the operating environment and dependent on said human action of inputting information.

5. Device as claimed in claim 4, **characterised in that** said man/machine interface (6) comprises a touch screen enabling support on certain zones to be detected, the support on certain zones constituting said stimulus, and **in that** said measuring means (22) comprise a sensor for detecting fingerprints in order to take at least one fingerprint reading when said touch screen is used by the user, said fingerprint constituting said biometric variable.

6. Device as claimed in claim 4, **characterised in that** said man/machine interface (6) comprises means for picking up a sound wave emitted by the user, the sound wave constituting said stimulus, and **in that** said measuring means (22) comprise means for analysing a voice print of said sound wave when said means for picking up a sound wave are used by the user, said voice print constituting said biometric variable.

7. Device as claimed in claim 4, **characterised in that** said man/machine interface (6) comprises a keypad enabling information to be keyed in by the user, the keying constituting said stimulus, and **in that** said measuring means (22) comprise a sensor for detecting the keying speed on said keypad by the user, said keying speed constituting said biometric variable.

8. Device as claimed in any one of claims 1 to 7, **characterised in that** it further comprises means for identifying a user configured to issue a command to lock the controllable locking means (12) in the event of negative identification.

9. Device as claimed in any one of claims 1 to 8, **characterised in that** said device (2) has a processor (10) enabling a plurality of functions to be run and **in that** said controllable locking means (12) are configured to lock this processor (10) in order to prevent operation of the mobile device (2).

10. Device as claimed in any one of claims 1 to 9, **characterised in that** it is a mobile telecommunication device (2) comprising a subscriber identification card (14) containing identification data permitting access to at least one wireless telecommunication network, said controllable locking means (12) being configured to enable this subscriber identification card (14) to be locked in order to prevent access to the telecommunication networks.

11. Device as claimed in any one of claims 1 to 10, **characterised in that** it is a telecommunication device (2) and **in that** said comparison means (26) are configured to issue a command to transmit a warning message addressed to a remote server across a telecommunication network in the event of a non-match.

12. Device as claimed in any one of claims 1 to 11, **characterised in that** it is a telecommunication device (2) and **in that** it comprises means for automatically transmitting/receiving position locating data which cannot be locked by said controllable locking means (12).

13. Device as claimed in any one of claims 10 to 12, **characterised in that** it is a mobile telephone.
